Europäisches Patentamt

European Patent Office

Office européen des brevets

(11) Publication number : **0 512 960 A1**

## (12) EUROPEAN PATENT APPLICATION

(21) Application number : **92830194.4**

(22) Date of filing : **23.04.92**

(51) Int. Cl.$^5$ : **C01G 55/00**

(30) Priority : **26.04.91 JP 124904/91**

(43) Date of publication of application :
**11.11.92 Bulletin 92/46**

(84) Designated Contracting States :
**DE GB**

(71) Applicant : **Tanaka Kikinzoku Kogyo K.K.**
**No. 6-6, Nihonbachi-Kayabacho, 2-chome**
**Chuo-ku Tokyo (JP)**

(72) Inventor : **Ichiishi, Satoshi, Tanaka Kikinzoku**
**Kogyo K.K.**
**Ichikawa Factory, No. 2015-7, Kohya**
**Ichikawa-shi, Chiba (JP)**
Inventor : **Kirioka, Yuki, Tanaka Kikinzoku**
**Kogyo K.K.**
**Ichikawa Factory, No. 2015-7, Kohya**
**Ichikawa-shi, Chiba (JP)**

(74) Representative : **Pellegri, Alberto et al**
**c/o Società Italiana Brevetti S.p.A. Via Puccini,**
**7**
**I-21100 Varese (IT)**

(54) Process of preparing hexaamminerhodium trihydroxide.

(57)    Disclosed is a process of preparing hexamminerhodium trihydroxide (HARhTH) which comprises forming a solution of hexaaminerhodium (III) chloride by means of a reaction between a solution of rhodium chloride (III) and an excessive amount of aqueous ammonia, heating the formed solution to make its pH weakly basic, and contacting the solution with anion exchange resin. No silver component is required in the present invention because of use of the anion exchange resin so that the silver ion never remains in the desired HARhTH.

EP 0 512 960 A1

## Background of the Invention

The present invention relates to a process of preparing hexaamminerhodium trihydroxide (hereinafter referred to as "HARhTH").

Heretofore, HARhTH has been prepared as its solution by adding silver oxide to a solution of hexaamminerhodium chloride to produre a precipitate of silver chloride which was then removed by means of filtration. However, it was difficult to perform an equivalence reaction between the silver and the chloride ion to determine the amount of the silver to be added so that the added silver was likely to remain in the solution.

## Summary of the Invention

The present invention has been made to overcome the above disadvantage.

An object of the present invention is to provide a process of preparing a HARhTH solution having a considerably small amount of impurities.

Another object is to provide a process of preparing a HARhTH solution by means of cation exchange.

The present invention is a process of preparing hexaamminerhodium trihydroxide which comprises forming a solution of hexaamminerhodium (III) chloride by means of a reaction between a solution of rhodium chloride (III) and an excessive amount. of aqueous ammonia, heating the formed solution to its pH weakly basic, and contacting the solution with anion exchange resin.

The anion exchange resin enployed in this invention may have been previously treated to have an OH form. It is highly desirable that the amount of the anion exchange resin is preferably not less than twice the theoretical one.

According to the present invention, the HARhTh solution containing the remarkably reduced chloride ion and having the high stability can be prepared.

## Detailed Description of the Invention

In order to obtain a solution of hexaamminerhodium (III) chloride, excessive aqueous ammonia is added to a solution of rhodium chloride which is retained, for example, in an autoclave at the pressure of 1.5 to 5 $kg/cm^2$ and at the temperature of 100 to 150 °C for one day and night.

Then, in order to remove the excessive ammonia formerly added, the solution of the hexaamminerhodium (III) chloride is heated at high temperature of, for example, 90 to 98 °C until the pH of the solution becomes weakly basic followed by the cooling to room temperature to prepare the desired hexaamminerhodium (III) chloride.

In order to complete the stable anion exchange when contacted with the following anion exchange resin, it is preferable to make the pH of the above solution 7.5 to 8.0 (weakly basic).

A strongly basic anion exchange resin is preferably employed as an anoin exchange resin, for example, DIAION SA10A and DIAION SA12A of MITSUBISHI KASEI KOGYO K.K.

In order to convert the anion exchange resin into the OH form before the the contact between the said anion exchange resin and the synthesized hexaamminerhodium (III) chloride, one liter of the anion exchange resin is, for example, packed in a column through which three liters of sodium hydroxide of about 5 % are passed at a space velocity of 2 followed by the passing of pure water at a space velocity of 2 until the pH of an effluent becomes 7. It is necessary to pass the pure water until the pH becomes 7 to remove a sodium ion.

Although the hexaamminerhodium (III) chloride may be contacted with the anion exchange resin of the OH form, for example, in a beaker by means of mixing and the stirring, they are preferably contacted with each other by passing the solution of the hexaaminerhodium (III) chloride through the anion exchange resin layer packed in a column as the above procedure employed for converting into the OH form. Since this procedure is convenient and requires no separation step and the like, it is preferably employed in successive procedures.

The passing rate of the solution may be 0.1 to 0.5 of a space velocity (SV), more preferably, SV=0.2.

The reason the amount of the anion exchange resin may be made to be not less than twice the theoretical amount thereof relates to the anion exchange equilibrium. This is nearly an indispensable factor to completely perform the exchange between the chloride ion of the rhodium compound and the OH ion.

Although the concentration of the solution of the hexaamminerhodium (III) chloride passing through the anion exchange resin is not especially restricted, it requires a concentration procedure in case of a dilute solution and it may result in the generation of precipitate during the passing of a solution in ease of a concentrated solution. Accordingly, the concentration is preferably adjusted to 40 g/liter to 100 g/liter.

According to the above process, HARhTH contaminated with a considerably small amount of impurities can be prepared.

Although Examples of the present invention will be described, these Examples do not intend to limit the present invention.

(Example 1)

To 100 ml of a solution of rhodium chloride (which contained 20 g of Rh), 400 ml of aqueous ammonia (28 %) was added which was then reacted for 24 hours in an autoclave of 500 rpm stirring at a pressure of 1.5 to 5 kg/cm$^2$ and at a temperature of 120 °C.

Then the solution after the reaction was cooled and filtered, and after the filtrate was put into a beaker, it was heated at 95 °C in a hot water bath until the pH of the filtrate became 7.7. After the heating was stopped, the filtrate was cooled to room temperature.

Then, 4 liters of the cooled filtrate was passed through a layer of a strongly basic anion exchange resin (Mitsubishi Kasei Kogyo K.K., DIAION SA10A) which had been previously converted into an OH form packed in a column made of glass of which a diameter was 50 mm at a space velocity (SV) of 0.2.

After the passing of the solution, the anion exchange resin was washed by passing pure water at a space velocity of 0.2 to flow out the component on the resin to obtain 2.5 liters of an HARhTH solution.

It was confirmed that upon the potentiometric titration of 2 ml out of the above HARhTH solution with 1/10 N hydrochloric acid, the HARhTH was produced because of the amount of the hydrochloric acid required for the titration showing the existence of 3 mols of the OH ion per 1 mol of the rhodium ion.

The concentration of the chloride ion in the solution was not more than 100 mg/liter.

(Example 2)

To 100 ml of a solution of rhodium chloride (which contained 20 g of Rh), 400 ml of aqueous ammonia (28 %) was added which was then reacted for 24 hours in an autoclave of 500 rpm stirring at a pressure of 1.5 to 5 kg/cm$^2$ and at a temperature of 130 °C.

Then the solution after the reaction was cooled and filtered, and after the filtrate was put into a beaker, it was heated at 95 °C in a hot water bath until the pH of the filtrate became 8.0. After the heating was stopped, the filtrate was cooled to room temperature.

Then, 4 liters of the cooled filtrate was passed through a layer of a strongly basic anion exchange resin (Mitsubishi Kasei Kogyo K.K., DIAION SA10A) which had been previously converted into an OH form packed in a column made of glass of which a diameter was 50 mm at a space velocity (SV) of 0.2.

After the passing of the solution, the anion exchange resin was washed by passing pure water at a space velocity of 0.2 to flow out the component on the resin to obtain 2.5 liters of an HARhTH solution.

It was confirmed that upon the potentiometric titration of 2 ml out of the above HARhTH solution with 1/10 N hydrochloric acid, the HARhTh was produced because of the amount of the hydrochloric acid required for the titration showing the existence of 3 mols of the OH ion per one mol of the rhodium ion.

The concentration of the chloride ion in the solution was not more than 100 mg/liter.

(Comparative Example)

To 100 ml of a solution of rhodium chloride (which contained 20 g of Rh), 400 ml of aqueous ammonia (28 %) was added which was then reacted for 24 hours in an autoclave of 500 rpm stirring at a pressure of 1.5 to 5 kg/cm$^2$ and at a temperature of 120 °C.

Then the solution after the reaction was cooled and filtered, and after the filtrate was put into a beaker, it was heated at 95 °C in a hot water bath until the pH of the filtrate became 7.2. After the heating was stopped, the filtrate was cooled to room temperature.

Then, silver oxide powder was added to the cooled filtrate under stirring until the formation of white precipitate of silver chloride was no longer observed, and the precipitate was filtered and washed with pure water.

Most of the filtrate was the solution of HARhTH, but the solution contained 100 mg/liter of the silver and 100 mg/liter of the chloride ion.

(Example 3)

The HARhTH solution was prepared according to the same procedures of those of Example 1 except that the amount of the anion exchange resin filled in the column was changed so as to control the ion exchange volume of the resin to the chloride ion in the hexaaminerhodium chloride. The concentration of the chloride ion remaining in the solution was measured and the results were shown in Table. It is apparent from the Table that the chloride ion remaining in the HARhTH solution becomes not more than 100 mg/ml so that the HARhTH solution of high purity can be obtained when the theoretical volume of the anion exchange resin to the chloride ion is not less than 2.

Table

| Volume of Anion Exchange resin Filled in Column (liter) | Theoretical Amount of Anion Exchange Resin to Chloride Ion (Equivalent) | Concentration of $Cl^-$ ion in HARhTH solution (mg/milliliter) |
|---|---|---|
| 1 | 0.5 | 10,700 |
| 2 | 1.0 | 1,000 |
| 3 | 1.5 | 300 |
| 4 | 2.0 | not more than 100 |
| 5 | 2.5 | not more than 100 |
| 6 | 3.0 | not more than 100 |
| 7 | 3.5 | not more than 100 |

## Claims

1. A process of preparing hexaamminerhodium trihydroxide which comprises forming a solution of hexaamminerhodium (III) chloride by means of a reaction between a solution of rhodium chloride (III) and an excessive amount of aqueous ammonia, heating the formed solution to make its pH weakly basic, and contacting the solution with anion exchange resin.

2. The process as claimed in Claim 1, wherein the anion exchange resin has been previously treated to have an OH form and the amount of the anion exchange resin is not less than twice the theoretical one.

**European Patent Office**

# EUROPEAN SEARCH REPORT

Application Number

EP 92 83 0194

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | P.PASCAL 'NOUVEAU TRAITE DE CHIMIE MINERALE ,TOME XIX' 1958 , MASSON ET CIE , PARIS * page 386 - page 387 * | 1 | C01G55/00 |
| A | US-A-3 567 368 (FRANTISEK NEKVASIL) * column 2, line 17 - line 25 * | 1,2 | |
| A | WORLD PATENTS INDEX LATEST Derwent Publications Ltd., London, GB; AN 86-179248 & JP-A-61 112 036 (AGENCY OF IND SCI TECH) * abstract * | 1,2 | |
| P,A | WORLD PATENTS INDEX LATEST Derwent Publications Ltd., London, GB; AN 92-100527 & JP-A-4 042 818 (TANAKA KIKINZOKU KOGYO) * abstract * | 1 | |

TECHNICAL FIELDS SEARCHED (Int. Cl.5)

C01G

The present search report has been drawn up for all claims

| Place of search | Date of completion of the search | Examiner |
|---|---|---|
| THE HAGUE | 18 AUGUST 1992 | libberecht-verbeeck |